# EUROPEAN PATENT APPLICATION

(11) **EP 4 835 156 A1**
(43) Date of publication of application: **04.11.2026**
(21) Application number: 25751979.3
(22) Date of filing: 22.01.2025
(51) Int. Cl.: C25B 11/053, C25B 1/04, C25B 9/00, C25B 9/21, C25B 9/23, C25B 11/031, C25B 11/046

(54) **ELECTROLYSIS CELL AND ELECTROLYSIS DEVICE**

(30) Priority: 06.02.2024 JP 2024016345
(71) Applicant: Mitsubishi Power, Ltd., Tokyo 100-8332 (JP); Mitsubishi Heavy Industries Thermal Systems, Ltd., Tokyo 100-8332 (JP)
(72) Inventor: INABA Kosuke, Tokyo 1008332 (JP); MIYOSHI Takahito, Tokyo 1008332 (JP); MUKAI Daisuke, Tokyo 1008332 (JP); SUKENOBU Takahiro, Tokyo 1008332 (JP); TAJIMA Hidehiko, Tokyo 1008332 (JP); TSURUMAKI Shigeru, Tokyo 1008332 (JP); TAGAMI Naoto, Tokyo 1008332 (JP); FURUKAWA Shoichi, Tokyo 1008332 (JP); HASHIMOTO Tsutomu, Tokyo 1008332 (JP)
(74) Representative: Studio Torta S.p.A.
(86) International application number: PCT/JP2025/001901
(87) International publication number: WO 2025/169725

(57) **Abstract**

An electrolysis cell includes an ion exchange membrane and sheet-shaped electrode provided in contact with at least an anode-side surface of the ion exchange membrane, on one of an anode side and a cathode side of the ion exchange membrane, and formed of a porous body of a porous stainless steel which contains nickel, in which the electrode includes an inner layer provided on a side of the surface, and an outer layer disposed outward of the inner layer and having a higher porosity than the inner layer.

## Description

### TECHNICAL FIELD

The present disclosure relates to an electrolysis cell and an electrolysis device.

Priority is claimed on Japanese Patent Application No. 2024-016345, filed February 6, 2024, the content of which is incorporated herein by reference.

### BACKGROUND ART

As a device for generating hydrogen, a device that electrolyzes water (an electrolysis device) is known. In this type of device, water is filled in an electrolysis tank partitioned into a cathode chamber and an anode chamber by an ion exchange membrane, and electrolysis of water is performed by supplying electric power to a cathode and an anode. In the cathode chamber, hydrogen is generated by a reaction between water and electrons. Hydroxide ions generated by the reaction pass through the ion exchange membrane and reach the anode chamber. In the anode chamber, oxygen and water are generated from the hydroxide ions. By continuing such reactions, a large amount of hydrogen can be obtained.

On both sides of the ion exchange membrane in a thickness direction, a current collector interposed between the ion exchange membrane and an anode and a current collector interposed between the ion exchange membrane and a cathode are arranged. In the related art, as the current collector, a current collector obtained by supporting a noble metal such as platinum or iridium oxide on a metal material or carbon serving as a base material has been used. However, since using the noble metal is disadvantageous in terms of cost, demand has increased for a configuration that replaces the noble metal. In the device according to Patent Document 1, a sintered body of powdered stainless steel is used as an electrode. It is said that a porous stainless steel electrode is obtained by sintering the powder.

### Citation List

### Patent Document

Patent Document 1: Japanese Patent No. 7179314

### SUMMARY OF INVENTION

### Technical Problem

Here, inside a porous electrode, gas is generated from a surface side of an ion exchange membrane. The gas passes through pores inside the electrode and is released from the electrode into the electrolyte. However, when the porous electrode is simply used as described above, passage resistance of the gas increases toward an outside of the electrode, and the generated gas remains inside the electrode. That is, discharge efficiency of the gas decreases. As a result, there has been a problem in that an intended gas release efficiency cannot be achieved.

The present disclosure has been made to solve the above-described problem, and an objective of the present disclosure is to provide an electrolysis cell and an electrolysis device that can be manufactured and operated at low cost and have improved gas release efficiency.

### Solution to Problem

In order to solve the above-described problem, an electrolysis cell according to the present disclosure includes an ion exchange membrane and a sheet-shaped electrode provided in contact with at least an anode-side surface of the ion exchange membrane, on one of an anode side and a cathode side of the ion exchange membrane, and formed of a porous body of a porous stainless steel which contains nickel, in which the electrode includes an inner layer provided on a side of the surface, and an outer layer disposed outward of the inner layer and having a higher porosity than the inner layer.

An electrolysis device according to the present disclosure includes the above-described electrolysis cell, an electrolyte supply section that supplies an electrolyte to the electrolysis cell, and a power supply section that applies a voltage to the electrolysis cell. Advantageous Effects of Invention

According to the present disclosure, it is possible to provide an electrolysis cell and an electrolysis device that can be manufactured and operated at low cost and have improved gas release efficiency.

### BRIEF DESCRIPTION OF DRAWINGS

[FIG. 1] A schematic view representing the configuration of an electrolysis device according to an embodiment of the present disclosure.
[FIG. 2] A schematic cross-sectional view representing the configuration of an electrolysis cell according to an embodiment of the present disclosure.
[FIG. 3] An exploded perspective view representing the configuration of the electrolysis cell according to the embodiment of the present disclosure.
[FIG. 4] An enlarged cross-sectional view representing an anode and a cathode according to the embodiment of the present disclosure.
[FIG. 5] A graph representing an example of a time course of a cell voltage (overvoltage) of the electrolysis cell according to the embodiment of the present disclosure.
[FIG. 6] An enlarged cross-sectional view representing a modification example of the anode and the cathode according to the embodiment of the present disclosure.

### DESCRIPTION OF EMBODIMENTS

Hereinafter, an electrolysis cell and an electrolysis device according to embodiments of the present disclosure will be described with reference to the drawings. In the following description, components having the same or similar functions are denoted by the same reference numerals. In the present disclosure, "facing" means that two members overlap each other when viewed in a certain direction, and may include a case where another member (for example, another layer) is present between the two members.

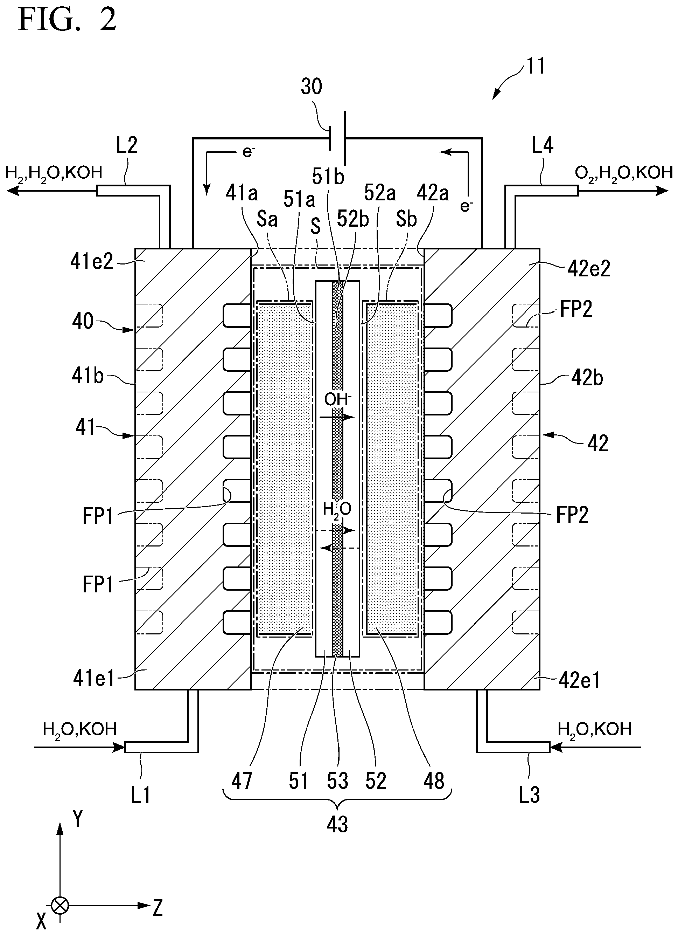

First, a Z direction, an X direction, and a Y direction are defined. The Z direction is a direction from a first separator 41 to a second separator 42, which will be described later (see FIG. 2). The X direction is a direction intersecting (for example, orthogonal to) the Z direction, and is a direction from a central portion C of a membrane electrode assembly 43, which will be described later, toward one end portion of the membrane electrode assembly 43. The Y direction is a direction intersecting (for example, orthogonal to) the Z direction and the X direction, and is, for example, a depth direction of the drawing sheet in FIG. 2. In the present disclosure, "area" means an area when viewed in the Z direction (that is, an area extending in the X direction and the Y direction). In addition, in the present disclosure, "outer size" means an outer size when viewed in the Z direction. That is, the "outer size" and "area" may mean substantially the same thing, and may be read interchangeably as appropriate.

### <1. Configuration of electrolysis device>

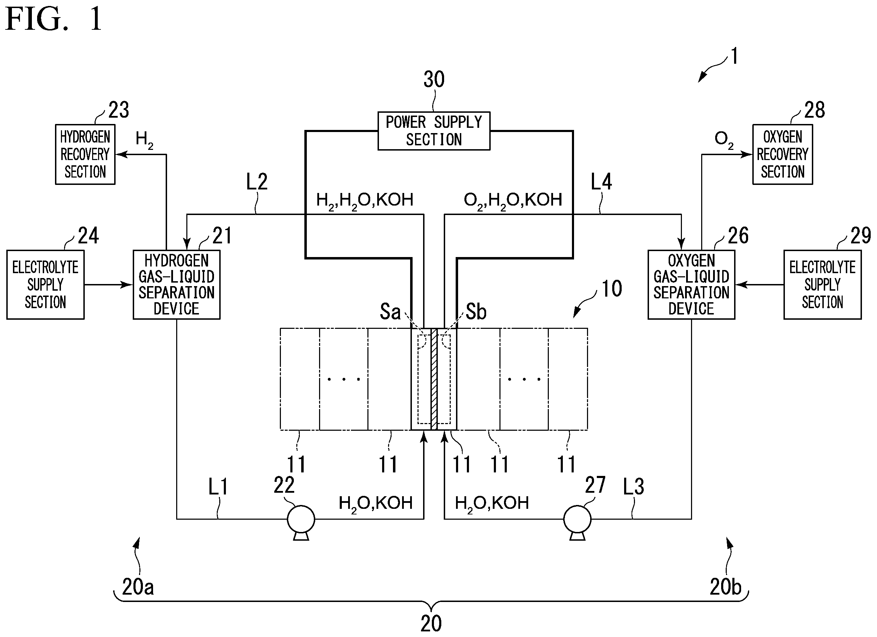

FIG. 1 is a schematic configuration view representing an overall configuration of an electrolysis device 1 according to the present embodiment. The electrolysis device 1 is, for example, a device that generates hydrogen by electrolyzing water contained in an electrolyte. The electrolysis device 1 is, for example, an anion exchange membrane (AEM)-type electrolysis device. However, the electrolysis device 1 is not limited to the above example, and may be a different type of electrolysis device such as a device that electrolytically reduces carbon dioxide.

The electrolysis device 1 includes, for example, an electrolysis cell stack 10, an electrolyte supply section 20, and a power supply section 30.

### (Electrolysis cell stack)

The electrolysis cell stack 10 is an assembly of a plurality of electrolysis cells 11. For example, the electrolysis cell stack 10 is formed by arranging the plurality of electrolysis cells 11 in one direction. Each of the electrolysis cells 11 includes a cathode chamber Sa and an anode chamber Sb. The electrolysis cell 11 will be described later in detail.

### (Electrolyte supply section)

The electrolyte supply section 20 is a supply unit that supplies the electrolyte to each of the electrolysis cells 11. The electrolyte is, for example, pure water or an alkaline aqueous solution. The electrolyte supply section 20 includes a cathode-side supply section 20a and an anode-side supply section 20b.

The cathode-side supply section 20a is a supply unit that supplies the electrolyte to the cathode chamber Sa of each of the electrolysis cells 11. The cathode-side supply section 20a includes, for example, a hydrogen gas-liquid separation device 21, a first pump 22, a hydrogen recovery section 23, a first electrolyte supply section 24, and piping lines L1 and L2.

The hydrogen gas-liquid separation device 21 stores the electrolyte. A supply port of the hydrogen gas-liquid separation device 21 is connected to the cathode chamber Sa of the electrolysis cell 11 through the piping line L1. The first pump 22 is provided in the middle of the piping line L1, and sends the electrolyte stored in the hydrogen gas-liquid separation device 21 toward the cathode chamber Sa of the electrolysis cell 11.

A return port of the hydrogen gas-liquid separation device 21 is connected to the cathode chamber Sa of the electrolysis cell 11 through the piping line L2. The electrolyte containing hydrogen generated in the electrolysis cell 11 flows into the hydrogen gas-liquid separation device 21 from the electrolysis cell 11. The hydrogen gas-liquid separation device 21 has a gas-liquid separation section that separates hydrogen contained in the electrolyte. The hydrogen separated from the electrolyte by the hydrogen gas-liquid separation device 21 is recovered by the hydrogen recovery section 23. The hydrogen gas-liquid separation device 21 is replenished with the electrolyte from the first electrolyte supply section 24.

On the other hand, the anode-side supply section 20b is a supply section that supplies the electrolyte to the anode chamber Sb of each of the electrolysis cells 11. The anode-side supply section 20b includes, for example, an oxygen gas-liquid separation device 26, a second pump 27, an oxygen recovery section 28, a second electrolyte supply section 29, and piping lines L3 and L4.

The oxygen gas-liquid separation device 26 stores the electrolyte. A supply port of the oxygen gas-liquid separation device 26 is connected to the anode chamber Sb of the electrolysis cell 11 through the piping line L3. The second pump 27 is provided in the middle of the piping line L3, and sends the electrolyte stored in the oxygen gas-liquid separation device 26 toward the anode chamber Sb of the electrolysis cell 11.

A return port of the oxygen gas-liquid separation device 26 is connected to the anode chamber Sb of the electrolysis cell 11 through the piping line L4. The electrolyte containing oxygen generated in the electrolysis cell 11 flows into the oxygen gas-liquid separation device 26 from the electrolysis cell 11. The oxygen gas-liquid separation device 26 has a gas-liquid separation section that separates oxygen contained in the electrolyte. The oxygen separated from the electrolyte by the oxygen gas-liquid separation device 26 is recovered by the oxygen recovery section 28. The oxygen gas-liquid separation device 26 is replenished with the electrolyte from the second electrolyte supply section 29.

### (Power supply section)

The power supply section 30 is a direct current supply device that applies a voltage to the electrolysis cell 11. The power supply section 30 applies, between an anode and a cathode of the electrolysis cell 11, a direct current voltage necessary for electrolysis of the electrolyte.

### <2. Configuration of electrolysis cell>

### <2.1 Basic structure of electrolysis cell>

Next, the electrolysis cell 11 will be described in detail.

FIG. 2 is a cross-sectional view schematically representing the electrolysis cell 11. The electrolysis cell 11 includes, for example, a first separator 41, a second separator 42, and a membrane electrode assembly 43.

### (First separator)

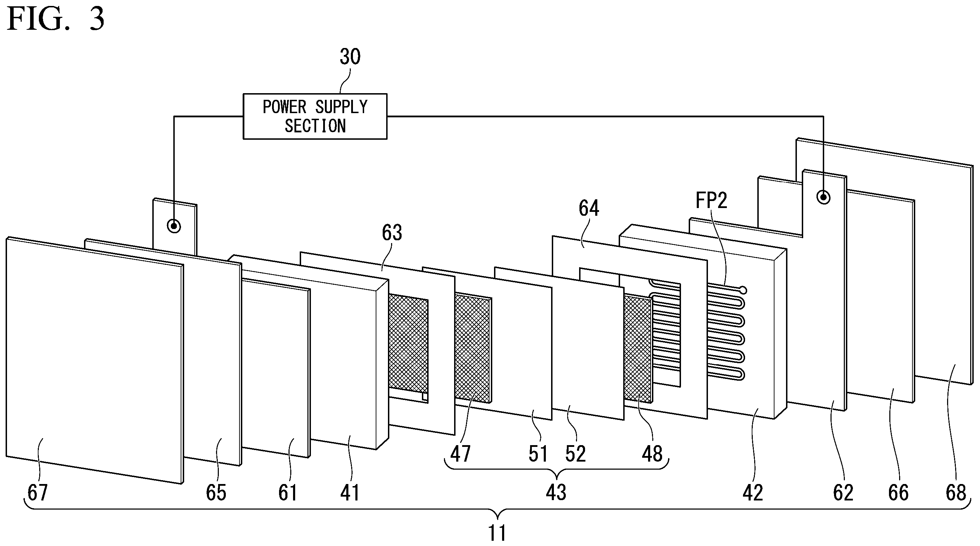

The first separator 41 is a member defining one surface of an internal space S of the electrolysis cell 11. The internal space S is a space including the cathode chamber Sa and the anode chamber Sb, which will be described later. The first separator 41 has, for example, a rectangular plate shape, and is formed of a metal member. For example, a negative voltage is applied to the first separator 41 from the power supply section 30 through a first current collector 61 (see FIG. 3), which will be described later.

The first separator 41 has a first end portion 41e1 (for example, a lower end portion) and a second end portion 41e2 (for example, an upper end portion) positioned on a side opposite to the first end portion 41e1. The above-described piping line L1 is connected to the first end portion 41e1 of the first separator 41. The above-described piping line L2 is connected to the second end portion 41e2 of the first separator 41. The first separator 41 has a first inner surface 41a facing the cathode chamber Sa described later. A first flow path FP1 through which the electrolyte supplied from the piping line L1 flows is formed in the first inner surface 41a. The first flow path FP1 is, for example, a groove provided in the first inner surface 41a. The electrolyte flowing through the first flow path FP1 is discharged to the outside of the electrolysis cell 11 through the piping line L2. Note that each structure (for example, the flow path structure) shown in FIG. 2 is merely an example, and does not limit the content of the present embodiment. For example, as the flow path structure, various structures can be used depending on the size and purpose of the device and an operating environment. The same applies to each structure shown in the other drawings.

### (Second separator)

The second separator 42 is a member disposed with the internal space S left between the second separator 42 and at least a part of the first separator 41, and defining the other surface of the internal space S. The second separator 42 has, for example, a rectangular plate shape, and is formed of a metal member. A positive voltage is applied to the second separator 42 from the power supply section 30 through a second current collector 62 (see FIG. 3), which will be described later. The first separator 41 and the second separator 42 included in the same electrolysis cell 11 form an electrolysis tank 40 of the electrolysis cell 11 as a pair of separators.

The second separator 42 has a first end portion 42e1 (for example, a lower end portion) and a second end portion 42e2 (for example, an upper end portion) positioned on a side opposite to the first end portion 42e1. The above-described piping line L3 is connected to the first end portion 42e1 of the second separator 42. The above-described piping line L4 is connected to the second end portion 42e2 of the second separator 42. The second separator 42 has a second inner surface 42a facing the anode chamber Sb described later. A second flow path FP2 through which the electrolyte supplied from the piping line L3 flows is formed in the second inner surface 42a. The second flow path FP2 is, for example, a groove provided in the second inner surface 42a. The electrolyte flowing through the second flow path FP2 is discharged to the outside of the electrolysis cell 11 through the piping line L4.

Note that, for convenience of explanation, a configuration is described here in which the first inner surface 41a of the first separator 41 has a groove for a flow path (first flow path FP1) and the second inner surface 42a of the second separator 42 has a groove for a flow path (second flow path FP2). However, for example, the first separator 41 of the electrolysis cell 11 included in the electrolysis cell stack 10 (see FIG. 1) may be a bipolar plate having, in addition to the first inner surface 41a, a similar groove for a flow path (first flow path FP1; indicated by a two-dot chain line in FIG. 2) on a surface 41b opposite to the first inner surface 41a. Further, the second separator 42 of the electrolysis cell 11 included in the electrolysis cell stack 10 may be a bipolar plate having, in addition to the second inner surface 42a, a similar groove for a flow path (second flow path FP2; indicated by a two-dot chain line in FIG. 2) on a surface 42b opposite to the second inner surface 42a. The shapes and arrangements of the grooves for flow paths provided on both surfaces of the first separator 41 may be different from each other. In addition, shapes and arrangements of the grooves for flow paths provided on both surfaces of the second separator 42 may be different from each other.

The membrane electrode assembly (MEA) 43 is a structure in which an ion exchange membrane and electrodes are assembled. The membrane electrode assembly 43 is disposed between the first separator 41 and the second separator 42, and is located in the internal space S. The membrane electrode assembly 43 includes, for example, a first ion exchange membrane 51, a second ion exchange membrane 52, an ionomer layer 53, a cathode 47, and an anode 48.

The first ion exchange membrane 51 is a membrane that selectively allows permeation of ions. The first ion exchange membrane 51 is, for example, a solid polymer electrolyte membrane. The first ion exchange membrane 51 is, for example, an anion exchange membrane (AEM) having hydroxide ion conductivity. However, the first ion exchange membrane 51 is not limited to the above example, and may be a different type of ion exchange membrane from the above example. The first ion exchange membrane 51 has, for example, a rectangular sheet shape. An outer size of the first ion exchange membrane 51 is smaller than an outer size of the first separator 41 or the second separator 42. The first ion exchange membrane 51 is disposed between the first separator 41 and the second separator 42, and is located in the above-described internal space S. The first ion exchange membrane 51 has a first surface 51a facing the first inner surface 41a of the first separator 41, and a second surface 51b positioned on a side opposite to the first surface 51a. In the internal space S, the cathode chamber Sa is defined between the first surface 51a of the first ion exchange membrane 51 and the first inner surface 41a of the first separator 41.

In the cathode chamber Sa, when a voltage is applied to the electrolysis cell 11, the following chemical reaction occurs, and hydrogen is generated from the electrolyte. In the present application, "XX is generated" may include a case where another substance is generated simultaneously with the generation of XX. Hydroxide ions generated in the cathode chamber Sa pass through the membrane electrode assembly 43 and move from the cathode chamber Sa to the anode chamber Sb.

2H₂O + 2e⁻ → H₂ + 2OH⁻ ... (Chem. 1)

### (Second ion exchange membrane)

The second ion exchange membrane 52 is a membrane that selectively allows permeation of ions. The second ion exchange membrane 52 is, for example, a solid polymer electrolyte membrane. The second ion exchange membrane 52 is, for example, an anion exchange membrane having hydroxide ion conductivity. However, the second ion exchange membrane 52 is not limited to the above example, and may be a different type of ion exchange membrane from the above example. The second ion exchange membrane 52 has, for example, a rectangular sheet shape. An outer size of the second ion exchange membrane 52 is smaller than the outer size of the first separator 41 or the second separator 42. For example, the outer size of the second ion exchange membrane 52 is the same as the outer size of the first ion exchange membrane 51. The second ion exchange membrane 52 is disposed between the first separator 41 and the second separator 42, and is located in the above-described internal space S. The second ion exchange membrane 52 has a third surface 52a facing the second inner surface 42a of the second separator 42, and a fourth surface 52b positioned on a side opposite to the third surface 52a. In the internal space S, the anode chamber Sb is defined between the third surface 52a of the second ion exchange membrane 52 and the second inner surface 42a of the second separator 42.

In the anode chamber Sb, when a voltage is applied to the electrolysis cell 11, the following chemical reaction occurs, and oxygen is generated from the electrolyte.

2OH⁻ → 1/2O₂ + H₂O + 2e⁻ ... (Chem. 2)

As a result, when the electrolysis cell 11 is viewed as a whole, the following chemical reaction occurs.

H₂O → H₂ + 1/2O₂ ... (Chem. 3)

In the present disclosure, ordinal numbers such as "first" and "second" added to the names of components are for convenience of explanation. For example, the names "third" and "fourth" do not presuppose that the names "first" and "second" exist for the same member. In the present embodiment, the names "third surface 52a" and "fourth surface 52b" of the second ion exchange membrane 52 do not presuppose that a first surface and a second surface exist in the second ion exchange membrane 52. For this reason, the names "third surface 52a" and "fourth surface 52b" may be read as "first surface 52a" and "second surface 52b" of the second ion exchange membrane 52.

In the present embodiment, the first ion exchange membrane 51 and the second ion exchange membrane 52 are integrated with the second surface 51b of the first ion exchange membrane 51 and the fourth surface 52b of the second ion exchange membrane 52 facing each other. In the present disclosure, the expression "the first ion exchange membrane 51 and the second ion exchange membrane 52 are integrated" is not limited to a case where the first ion exchange membrane 51 and the second ion exchange membrane 52 are directly bonded, and may include a case where another layer (for example, an ionomer layer 53 described later) is present between the first ion exchange membrane 51 and the second ion exchange membrane 52. In addition, a configuration that does not include the ionomer layer 53 or a configuration in which the first ion exchange membrane 51 and the second ion exchange membrane 52 form a single membrane may also be employed.

Materials for the first ion exchange membrane 51 and the second ion exchange membrane 52 may be the same as or different from each other. For example, the materials for the first ion exchange membrane 51 and the second ion exchange membrane 52 are selected as follows. That is, since an oxidation reaction does not occur in the cathode chamber Sa, the first ion exchange membrane 51 does not need to have high oxidation resistance. Therefore, for example, a membrane made of a material having a higher ion conductivity than a material for the second ion exchange membrane 52 is employed as the first ion exchange membrane 51. On the other hand, since an oxidation reaction occurs in the anode chamber Sb, the second ion exchange membrane 52 preferably has high oxidation resistance. Therefore, for example, a membrane made of a material having higher oxidation resistance than a material for the first ion exchange membrane 51 is employed as the second ion exchange membrane 52.

As an example, the "membrane having high ion conductivity" is a membrane containing a polystyrene-based or tetraphenyl-based composition in a main chain and containing an imidazolium group or a quaternary ammonium group in a side chain. As an example, the "membrane having high oxidation resistance" is a membrane containing a polysulfone-based or bromobutylstyrene-based composition.

### (Ionomer layer)

The ionomer layer 53 is a layer for bonding the first ion exchange membrane 51 and the second ion exchange membrane 52. The ionomer layer 53 is a layer through which the hydroxide ions can pass. The ionomer layer 53 is provided between the second surface 51b of the first ion exchange membrane 51 and the fourth surface 52b of the second ion exchange membrane 52. For example, the ionomer layer 53 is provided over the entire second surface 51b of the first ion exchange membrane 51 and the entire fourth surface 52b of the second ion exchange membrane 52. The thickness of the ionomer layer 53 is, for example, 10 nm or more and 10 µm or less. In the present embodiment, the first ion exchange membrane 51 and the second ion exchange membrane 52 are integrated through the ionomer layer 53.

### (Cathode and anode)

The cathode 47 and the anode 48 each have a sheet-shaped (film shape) and are formed of a stainless alloy. More specifically, an austenitic stainless steel , such as SUS304 or SUS316 is used for the cathode 47 and the anode 48. In the following description, the cathode 47 and the anode 48 may be collectively referred to as an electrode 60.

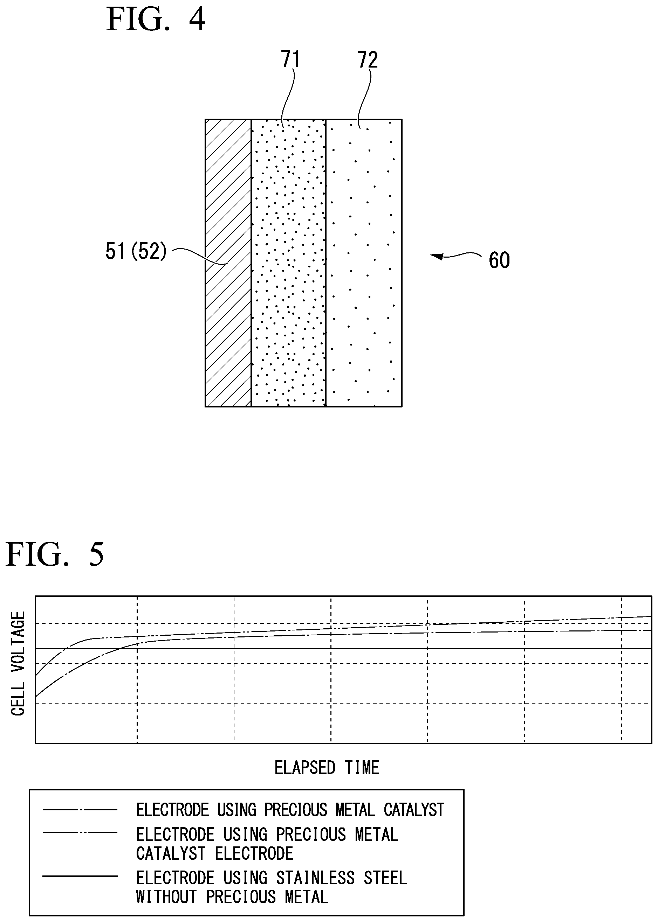

As shown in FIG. 4, the electrode 60 has an inner layer 71 and an outer layer 72. The inner layer 71 is disposed so as to contact the first ion exchange membrane 51 or the second ion exchange membrane 52. The outer layer 72 is laminated outside the inner layer 71, that is, on a side opposite to the ionomer layer 53.

Both the inner layer 71 and the outer layer 72 are formed of films of a porous body of a stainless alloy containing a nickel element. More specifically, a sintered body of stainless fibers or a sheet formed by weaving stainless fibers is preferably used. As a stainless-based material, SUS316, SUS304, Fe-rich SUS, SUS340, or the like is used. A porosity of the porous body differs between the inner layer 71 and the outer layer 72. More specifically, the porosity of the outer layer 72 is relatively higher than the porosity of the inner layer 71. In addition, the porosity changes stepwise (discontinuously) from the inner layer 71 toward the outer layer 72.

As an example, it is desirable that the porosity of the inner layer 71 is 70% or less and the porosity of the outer layer 72 is more than 70%. In addition, it is desirable that a fiber diameter of fibers forming these electrodes 60 is 50 µm or less. Furthermore, it is desirable that air permeability is 3 cm³/(cm²·s) or more (based on measurement by the JIS L 1096A method). It is desirable that flow resistance is 0.04 kPa·s/m or less.

These electrodes 60 are not provided with a catalyst layer made of a noble metal. That is, the electrode 60 functions not only as an electrode but also as a current collector (porous stainless steel body).

FIG. 3 is an exploded perspective view representing the electrolysis cell 11. The electrolysis cell 11 includes, in addition to the above-described configuration, for example, a first current collector 61, a second current collector 62, a first insulator 63, a second insulator 64, a first insulating member 65, a second insulating member 66, a first end plate 67, and a second end plate 68.

### (First current collector)

The first current collector 61 is an electrical connection portion that transmits a negative voltage applied from the power supply section 30 to the first separator 41. The first current collector 61 is a metallic plate member (for example, a copper plate). For example, the first current collector 61 is in contact with the first separator 41 from a side opposite to the internal space S of the electrolysis cell 11, and is electrically connected to the first separator 41. A negative voltage necessary for electrolysis in the electrolysis cell 11 is applied to the first current collector 61 from the power supply section 30. The first current collector 61 may be shared by two electrolysis cells 11 adjacent to each other in the electrolysis cell stack 10.

### (Second current collector)

The second current collector 62 is an electrical connection portion that transmits a positive voltage applied from the power supply section 30 to the second separator 42. The second current collector 62 is a metallic plate member (for example, a copper plate). For example, the second current collector 62 is in contact with the second separator 42 from a side opposite to the internal space S of the electrolysis cell 11, and is electrically connected to the second separator 42. A positive voltage necessary for electrolysis in the electrolysis cell 11 is applied to the second current collector 62 from the power supply section 30. The second current collector 62 may be shared by two electrolysis cells 11 adjacent to each other in the electrolysis cell stack 10.

### (First insulator)

The first insulator 63 is a member that provides insulation between an outer peripheral portion of the first separator 41 and an outer peripheral portion of the second separator 42. The first insulator 63 is attached to the first inner surface 41a of the first separator 41, and covers an end portion of the first inner surface 41a. A material for the first insulator 63 is not particularly limited as long as the material is an insulating material, and is, for example, a resin having a sheet shape such as polytetrafluoroethylene (PTFE).

### (Second insulator)

The second insulator 64 is a member that provides insulation between the outer peripheral portion of the first separator 41 and the outer peripheral portion of the second separator 42, similarly to the first insulator 63. The second insulator 64 is attached to the second inner surface 42a of the second separator 42, and covers an end portion of the second inner surface 42a. A material for the second insulator 64 is not particularly limited as long as the material is an insulating material, and is, for example, a resin having a sheet shape such as PTFE. Further, the first insulator 63 and the second insulator 64 may be used as an integrated insulator.

### (First insulating member)

The first insulating member 65 is located between the first current collector 61 and the first end plate 67. An outer size of the first insulating member 65 is, for example, the same as the outer size of the first current collector 61 or larger than the outer size of the first current collector 61.

### (Second insulating member)

The second insulating member 66 is located between the second current collector 62 and the second end plate 68. An outer size of the second insulating member 66 is, for example, the same as the outer size of the second current collector 62 or larger than the outer size of the second current collector 62.

### (First end plate)

The first end plate 67 is positioned on a side opposite to the first insulating member 65 with respect to the internal space S of the electrolysis cell 11. An outer size of the first end plate 67 is, for example, larger than the outer size of the first insulating member 65.

### (Second end plate)

The second end plate 68 is positioned on a side opposite to the second insulating member 66 with respect to the internal space S of the electrolysis cell 11. An outer size of the second end plate 68 is, for example, larger than the outer size of the second insulating member 66.

The electrolysis cell 11 is not limited to the configuration described above. For example, when a plurality of electrolysis cells 11 are arranged side by side in the electrolysis cell stack 10, two adjacent electrolysis cells 11 among the plurality of electrolysis cells 11 may share the first separator 41 or the second separator 42, each of the first separator 41 and the second separator 42 being a bipolar plate. In this case, a current collector (first current collector 61 or second current collector 62), an insulator (first insulator 63 or second insulator 64), an insulating member (first insulating member 65 or second insulating member 66), and an end plate (first end plate 67 or second end plate 68) need not be present between two adjacent electrolysis cells 11.

### (Operations and Effects)

Here, inside a porous electrode, gas is generated from a surface side of an ion exchange membrane. The gas passes through pores inside the electrode and is released from the electrode into the electrolyte. However, when the porous electrode is simply used as described above, passage resistance of the gas increases toward an outside of the electrode, and the generated gas remains inside the electrode. That is, discharge efficiency of the gas decreases. As a result, there has been a problem in that an intended gas release efficiency cannot be achieved. In order to solve this problem, each of the above configurations is employed in the present embodiment.

According to the above-described configuration, the electrode 60 is formed by the inner layer 71 and the outer layer 72, and the outer layer 72 has a relatively high porosity. Accordingly, gas generated in the inner layer 71 by electrolysis can be smoothly released to the outside through relatively large pores in the outer layer 72. That is, flow resistance to the gas is reduced, whereby discharge efficiency of the gas is significantly improved. As a result, gas release efficiency of the electrolysis cell 11 can be greatly improved. In addition, since a catalyst layer made of a noble metal, which is used in the related art, is not used, cost required to manufacture and operate the electrolysis cell 11 can be greatly reduced. Therefore, the cost of generated gas, which is the final product, can be further reduced.

Furthermore, as represented by the one-dot chain line or the two-dot chain line in FIG. 5, compared with a case in which an electrode current collector supporting a noble metal catalyst is used, the electrode 60 according to the present embodiment, represented by the solid line, can stably reduce a cell voltage (overvoltage). That is, disadvantages caused by not using the noble metal catalyst can be eliminated, and electrolysis can be performed efficiently and stably.

According to the above-described configuration, the electrode 60 can be formed on both the anode side and the cathode side, without using the noble metal catalyst. As a result, cost required to manufacture and operate the electrolysis cell 11 can be further greatly reduced. Therefore, the cost of generated gas, which is the final product, can be still further reduced.

According to the above-described configuration, since the porosity changes stepwise from the inner layer 71 toward the outer layer 72, the electrode can be configured easily and at low cost by bonding together a plurality of types of porous members having different porosities or by using a gradient material in which the porosity changes discontinuously. As a result, cost required to manufacture and operate the electrolysis cell 11 can be further greatly reduced. Therefore, the cost of generated gas, which is the final product, can be still further reduced.

### (Other Embodiments)

Although the embodiments of the present disclosure have been described in detail above with reference to the accompanying drawings, the specific configuration is not limited to the embodiments and the present disclosure also includes design changes and the like without departing from the gist of the present disclosure.

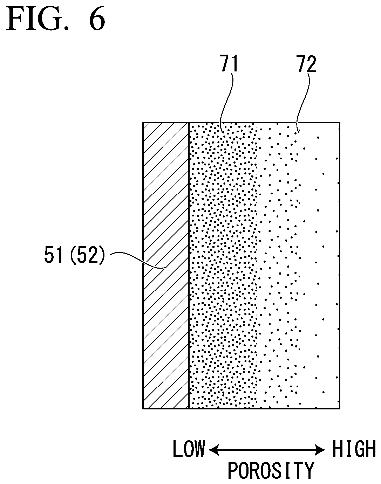

For example, as a modification example shown in FIG. 6, a configuration in which the porosity changes continuously from the inner layer 71 toward the outer layer 72 may also be employed. In this case, a boundary between the inner layer 71 and the outer layer 72 is defined as being on a virtual plane having a porosity of 70%.

Here, an amount of gas generated is larger toward the inner layer 71 side and smaller toward the outer layer 72 side. For this reason, a configuration is required in which gas on the inner side can be efficiently released toward the outer side, that is, toward the outside of the electrode. According to the above-described configuration, the porosity changes continuously from the inner layer 71 toward the outer layer 72. As a result, gas generated on the inner side moves toward the outer side having a higher porosity while carrying along gas generated along the flow path. Therefore, apparent flow resistance is further reduced, so that gas discharge efficiency can be further increased. Accordingly, gas release efficiency of the electrolysis cell 11 can be greatly improved. The electrode 60 in which the porosity changes continuously in this manner can be easily obtained by, for example, three-dimensional additive manufacturing or the like.

In the above-described embodiment, an example has been described in which one inner layer 71 and one outer layer 72 are laminated. However, by laminating a plurality of the inner layers 71 and a plurality of the outer layers 72, the electrode 60 having three or more layers as a whole can also be configured. With the configuration as well, operations and effects similar to those described above can be obtained.

Furthermore, in the above-described embodiment, an example has been described in which the electrode 60 is used on both the cathode side and the anode side. However, the electrode 60 may be applied only to the anode side, and carbon supporting a metal catalyst may be used on the cathode side. The catalyst in this case includes one or more of nickel, a nickel alloy, cerium oxide, lanthanum oxide, and platinum. Particularly preferably, platinum-supported carbon is used. Even in this case, operations and effects similar to those described above can be obtained.

### <Supplementary Note>

The electrolysis cell and the electrolysis device described in each embodiment can be understood, for example, as follows.

(1) The electrolysis cell 11 according to a first aspect includes ion exchange membranes 51 and 52 and a sheet-shaped electrode 60 provided in contact with at least an anode-side surface of the ion exchange membrane 51 and 52, on one of an anode side and a cathode side of the ion exchange membrane 51 and 52, and formed of a porous body of a porous stainless steel which contains nickel, in which the electrode 60 includes an inner layer 71 provided on a side of the surface, and an outer layer 72 disposed outward of the inner layer 71 and having a higher porosity than the inner layer 71.

According to the above-described configuration, the electrode 60 is formed by the inner layer 71 and the outer layer 72, and the outer layer 72 has a relatively high porosity. Accordingly, gas generated in the inner layer 71 by electrolysis can be smoothly released to the outside through relatively large pores in the outer layer 72.

(2) The electrolysis cell 11 according to a second aspect is the electrolysis cell 11 according to (1), in which the sheet-shaped electrode 60 is provided on each of the anode side and the cathode side of the ion exchange membranes 51 and 52.

According to the above-described configuration, the electrode 60 can be formed on both the anode side and the cathode side, without using the noble metal catalyst.

(3) The electrolysis cell 11 according to a third aspect is the electrolysis cell 11 according to (1) or (2), in which the porosity changes stepwise from the inner layer 71 toward the outer layer 72.

According to the above-described configuration, since the porosity changes stepwise from the inner layer 71 toward the outer layer 72, the electrode can be easily and inexpensively formed only by bonding together a plurality of types of porous members having different porosities.

(4) The electrolysis cell 11 according to a fourth aspect is the electrolysis cell 11 according to (1) or (2), in which the porosity changes continuously from the inner layer 71 toward the outer layer 72.

According to the above-described configuration, the porosity changes continuously from the inner layer 71 toward the outer layer 72. As a result, gas generated on the inner side moves toward the outer side having a higher porosity while carrying along gas generated along the flow path. Therefore, apparent flow resistance is further reduced, so that gas discharge efficiency can be further increased.

(5) The electrolysis cell 11 according to a fifth aspect is the electrolysis cell 11 according to any one aspect of (1) to (4), in which the porosity of the inner layer 71 is 70% or less, and the porosity of the outer layer 72 is more than 70%.

According to the above-described configuration, gas generated in the inner layer 71 by electrolysis can be smoothly released to the outside through relatively large pores of the outer layer 72.

(6) The electrolysis device 1 according to a sixth aspect includes the electrolysis cell 11 according to any one aspect of (1) to (5), an electrolyte supply section 20 that supplies an electrolyte to the electrolysis cell 11, and a power supply section 30 that applies a voltage to the electrolysis cell 11.

According to the above configuration, it is possible to provide the electrolysis device 1 that can be manufactured and operated at low cost and has improved gas release efficiency.

### INDUSTRIAL APPLICABILITY

According to the present disclosure, it is possible to provide an electrolysis cell and an electrolysis device that can be manufactured and operated at low cost and have improved gas release efficiency.

### REFERENCE SIGNS LIST

1 Electrolysis device
10 Electrolysis cell stack
11, 11A, 11B Electrolysis cell
20 Electrolyte supply section
30 Power supply section
40 Electrolysis tank
41 First separator
42 Second separator
47 Cathode
48 Anode
51 First ion exchange membrane
51a First surface
51b Second surface
52 Second ion exchange membrane
52a Third surface
52b Fourth surface
53 Ionomer layer
71 Inner layer
72 Outer layer

## Claims

1. An electrolysis cell comprising:
an ion exchange membrane; and
a sheet-shaped electrode provided in contact with at least an anode-side surface of the ion exchange membrane, on one of an anode side and a cathode side of the ion exchange membrane, and formed of a porous body of a porous stainless steel which contains nickel,
wherein the electrode includes an inner layer provided on a side of the surface, and
an outer layer disposed outward of the inner layer and having a higher porosity than the inner layer.

2. The electrolysis cell according to Claim 1, wherein the sheet-shaped electrode is provided on each of the anode side and the cathode side of the ion exchange membrane.

3. The electrolysis cell according to Claim 1 or 2, wherein the porosity changes in a stepwise manner from the inner layer toward the outer layer.

4. The electrolysis cell according to Claim 1 or 2, wherein the porosity changes continuously from the inner layer toward the outer layer.

5. The electrolysis cell according to Claim 1 or 2, wherein the porosity of the inner layer is 70% or less, and the porosity of the outer layer is more than 70%.

6. An electrolysis device comprising:
the electrolysis cell according to Claim 1 or 2;
an electrolyte supply section that supplies an electrolyte to the electrolysis cell; and
a power supply section that applies a voltage to the electrolysis cell.
